# EUROPÄISCHE PATENTSCHRIFT

(11) **EP 1 711 545 B1**
(45) Veröffentlichungstag und Bekanntmachung des Hinweises auf die Patenterteilung: **09.07.2008**
(21) Anmeldenummer: 05706886.8
(22) Anmeldetag: 14.01.2005
(51) Int. Cl.: C08F 283/06, C09D 151/08, C09D 133/10

(54) **LÖSEMITTELARME, OH-FUNKTIONELLE DISPERSIONEN II**
LOW-SOLVENT, OH-FUNCTIONAL DISPERSIONS (II)
DISPERSIONS A FONCTIONS OH, A FAIBLE TENEUR EN SOLVANTS (II)

(30) Priorität: 27.01.2004 DE 102004003894
(43) Veröffentlichungstag der Anmeldung: 18.10.2006
(73) Patentinhaber: Bayer MaterialScience AG, 51368 Leverkusen (DE)
(72) Erfinder: MELCHIORS, Martin, 42799 Leichlingen (DE); MÜNZMAY, Thomas, 41539 Dormagen (DE); STINGL, Thomas, 56410 Montabaur (DE); OTTENSMANN, Hartmut, 40221 Düsseldorf (DE); GEWISS, Heinz-Dietmar, 40668 Meerbusch (DE)
(86) Internationale Anmeldenummer: PCT/EP2005/000303
(87) Internationale Veröffentlichungsnummer: WO 2005/070981

(56) Entgegenhaltungen:
- US-A- 5 472 999
- US-A- 6 139 918
- US-B1- 6 251 985

## Beschreibung

Die Erfindung betrifft wässrige, hydroxyfunktionelle Bindemitteldispersionen mit niedrigem Lösemittelgehalt auf Basis von hydroxyfunktionellen Copolymerisaten, ein Verfahren zur Herstellung solcher Bindemittel, Bindemittelkombinationen auf dieser Basis und die Verwendung der Bindemittel in Lacken.

Es ist bekannt, in Beschichtungssystemen (Paint & Resin 12/83, S. 34 ff., DE-A 3 209 421, EP-A 95 263, EP-A 105 293, EP-A 133 949, EP-A 288 763 und dort zitierter Literatur) wasserverdünnbare Bindemittel auf Copolymerbasis einzusetzen. Diese enthalten jedoch in der Regel Emulgatoren zur Stabilisierung und/oder größere Anteile organischer Colösemittel.

Üblicherweise beeinflussen die Emulgatoren die Eigenschaften der Lacke bzw. der Beschichtungen, wie z.B. Wasserfestigkeit, Filmoptik (Glanz), Pigmentierfähigkeit dabei negativ.

Die Verwendung größerer Mengen organischer Lösemittel ist aus ökologischen Gründen unerwünscht. Sie ist jedoch nicht zu vermeiden, um bei der Polymerisatherstellung ein ausreichende Rührbarkeit und Wärmeabfuhr der Reaktionsmischung sowie einen gewissen Mindestfüllgrad des Reaktors zu gewährleisten. Zusätzlich führen organische Lösemittel in wässrigen Beschichtungsmitteln zu vorteilhaften Effekten wie verbesserter Lagerstabilität, Pigmentbenetzung, Filmoptik und Verlauf.

Eine nachträgliche Reduzierung verfahrensbedingt enthaltener Lösemittel aus Copolymerisaten oder -dispersionen ist mit hohem apparativen und energetischen Aufwand und damit auch hohen Kosten verbunden, so dass Bedarf an wässrigen Polymerisatdispersionen besteht, bei deren Herstellung auf die Verwendung organischer Lösemittel weitgehend verzichtet werden kann, ohne dass eine Verschlechterung der anwendungstechnischen Eigenschaften auftritt.

Copolymerisatdispersionen, welche durch eine chemische Reaktion, z.B. mit einem Aminoplastharz, einem blockierten Polyisocyanat oder einem Polyisocyanat ausgehärtet werden sollen, müssen eine bestimmte Menge an reaktiven Gruppen, z.B. Hydroxygruppen, enthalten. Diese Gruppen werden in der Regel durch die Mitverwendung hydroxyfunktioneller (Meth)acrylsäureester bei der Copolymerisation in das Copolymer eingebracht. Diese Rohstoffe sind allerdings im Vergleich zu den nichtfunktionellen (Meth)acrylsäureestern oder auch zu Styrol sehr teuer. Zudem müssen häufig auch größere Mengen dieser Rohstoffe im Vergleich zu organisch gelösten Copolymerisaten eingesetzt werden, um durch eine größere Vemetzungsdichte die Hydrophilie der Lackfilme zu kompensieren.

Die US 6 251 985 beschreibt wässrige Beschichtungszusammensetzungen mit einem Polyol A und einem Polyisocyanat B, die miteinander reagieren. Zur Herstellung des Polyolbestandteils A kann unter anderem ein Monoepoxid wie Cadura^{®} E10, dass in das Polyol A eingebaut wird, verwendet werden.

Die US 6139 918 beschreibt wässrige Dispersionen für Beschichtungszwecke mit einer Polyolkomponente A und einer Polyisocyanatkomponente B. Der aus diesen Komponenten gebildete Polyester kann zur Einführung von Hydroxylgruppen mit Cardura^{®} E10 umgesetzt werden.

Die US 5 472 999 beschreibt wässrige Harzdispersionen, die als Hauptbestandteil ein acrylmodifiziertes Epoxid-/Polyaminharz enthalten. Dieses ist aufgebaut aus einem Bisphenol-/Epoxyharz mit zwei Epoxygruppen.

Einen Weg zur Herstellung hydroxyfunktioneller Copolymerisatsekundärdispersionen, der den Einsatz von Lösungsmitteln bei der Polymerisation weitgehend vermeidet, weist die Lehre der EP-A 0 758 007. Nach dieser Schrift werden die üblicherweise eingesetzten Lösemittel ganz oder teilweise durch hydroxyfunktionelle Polyether ersetzt. Die hydroxyfunktionellen Polyether verbleiben als Reaktivverdünner in der Sekundärdispersion und reagieren bei der späteren Vernetzung mit Isocyanaten oder blockierten Isocyanaten unter Urethanbildung mit. Sie tragen damit nicht zum VOC bei. Als nachteilig an diesen Produkten erweist sich aber ihre schlechte Beständigkeit.

Es wurde nun gefunden, dass wässrige Copolymerisatdispersionen mit niedrigem Lösemittelgehalt und hohem Beständigkeitsniveau der Lackfilme basierend auf hydroxyfunktionellen Copolymerisaten hergestellt werden können, wenn hydroxyfunktionelle Komponenten der Formel (I): 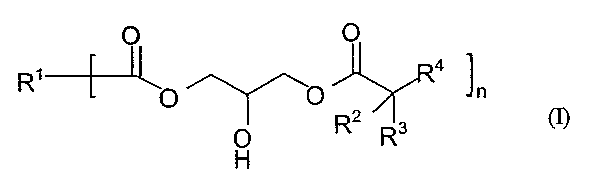 in der
- R¹: ein aliphatischer, araliphatischer oder aromatischer Rest mit 1 bis 18 Kohlenstoffatomen ist,
- R²: H oder CH₃ ist,
- R³, R⁴: gleiche oder unterschiedliche aliphatische Reste mit 1 bis 7 Kohlenstoffatomen sind und
- n: 1 bis 4 ist,
als Reaktivverdünner verwendet werden.

Gegenstand der Erfindung ist daher ein Verfahren zur Herstellung von Copolymerisatdispersionen, bei dem
A) eine oder mehrere Vinylmonomermischungen enthaltend
   a) OH-gruppenfreie (Meth)acrylsäureester und/oder Vinylaromaten,
   b) hydroxyfunktionelle Vinylmonomere oder hydroxyfunktionelle (Meth)acrylsäureester,
   c) ionische und/oder potentiell ionische, zur radikalischen Copolymerisation befähigte Monomere sowie
   d) gegebenenfalls weitere, von den Verbindungen der Komponenten a) - c) verschiedene zur radikalischen Copolymerisation befähigte Monomere
      in Anwesenheit von
   e) Verbindungen der Formel (I) 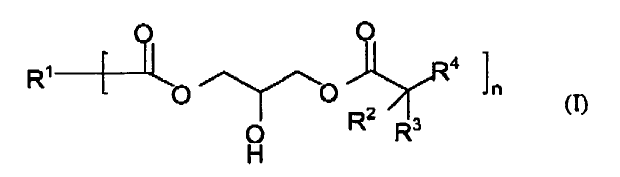 in der
      - R¹: ein aliphatischer, araliphatischer oder aromatischer Rest mit 1 bis 18 Kohlenstoffatomen ist,
      - R²: H oder CH₃ ist,
      - R³, R⁴: gleiche oder unterschiedliche aliphatische Reste mit 1 bis 7 Kohlenstoffatomen sind und
      - n: 1 bis 4 ist,
      radikalisch polymerisiert werden und das so erhaltene Copolymerisat anschließend
B) vor oder nach Zugabe eines Neutralisationsmittels
C) in Wasser dispergiert wird, wobei das Neutralisationsmittel in B) in solchen Mengen zugesetzt wird, dass in Summe ein theoretischer Neutralsationsgrad von 40 bis 150 % vorliegt.

Ferner ist ein weiterer Gegenstand der Erfindung die nach dem vorstehend beschriebenen Verfahren erhältlichen wässrigen Copolymerisatdispersionen.

Als Monomere der Komponente a) werden Acrylate und Methacrylate (im folgenden als (Meth)-Acrylate bezeichnet) mit 1 bis 18 Kohlenstoffalomen im Alkoholteil der Estergruppe eingesetzt. Dieser Alkoholteil kann linear-, verzweigt- oder cycloaliphatisch sein.

Beispielsweise geeignet als Monomere der Komponente a) sind Methyl-, Ethyl-, n-Propyl-, n-Butyl-, Isopropyl-, Isobutyl-, t-Butyl-, die isomeren Pentyl-, Hexyl-, 2-Ethylhexyl-, Octyl-, Dodecyl-, Hexadecyl-, Octadecyl- oder Cyclohexyl-, Trimethylcyclohexyl- und Isobomyl-(meth)acrylate.

Ferner können in a) auch Acetoacetoxyethylmethacrylat, Acrylamid, Acrylnitril, Vinylether, Methacrylnitril, Vinylacetate, gegebenenfalls substituierte Styrole und Vinyltoluole eingesetzt werden.

Ebenfalls möglich ist der Einsatz beliebiger Mischungen der vorstehend genannten Verbindungen in der Komponente a).

In Komponente b) können ethylenisch ungesättigte, OH-gruppenhaltige Monomere eingesetzt werden, wie beispielsweise Hydroxyalkylester ungesättigter Carbonsäuren, bevorzugt Hydroxyalkyl(meth)acrylate mit 2 bis 12, bevorzugt 2 bis 6 Kohlenstoffatomen im Hydroxyalkylrest.

Beispiele derartiger Verbindungen sind 2-Hydroxyethyl(meth)acrylat, die isomeren Hydroxypropyl(meth)acrylate, 2-, 3- und 4-Hydroxybutyl(meth)acrylate sowie die isomeren Hydroxyhexyl(meth)acrylate.

Unter (Meth)-Acrylaten im Rahmen der vorliegenden Erfindung sind stets sowohl die betreffenden Acrylate als auch Methacrylate zu verstehen.

Ebenfalls in b) können mit Alkylenoxiden modifizierte oder kettenverlängerte, polymerisierbare hydroxyfunktionelle Monomere mit einem zahlenmittleren Molekulargewicht ≤ 3 000 g/mol, bevorzugt ≤ 500 g/mol eingesetzt werden. Als Alkylenoxide kommen hierfür vorzugsweise Ethylen-, Propylen oder Butylenoxid einzeln oder in Mischungen zum Einsatz.

Als ionische und/oder potentiell ionische, zur radikalischen Copolymerisation befähigte Monomeren der Komponente c) können olefinisch ungesättigte Monomere mit Carbonsäure- oder Carbonsäureanhydrid-Gruppen, wie z.B. Acrylsäure, Methacrylsäure, β-Carboxyethylacrylat, Crotonsäure, Fumarsäure, Maleinsäureanhydrid, Itaconsäure oder Monoalkylester zweibasiger Säuren bzw. Anhydride wie z.B. Maleinsäure-monoalkylester eingesetzt werden, bevorzugt sind Acrylsäure und/oder Methacrylsäure.

Ferner geeignet als Verbindungen der Komponente c) sind auch ungesättigte, radikalisch polymerisierbare Verbindungen mit Phosphat- bzw. Phosphonat- oder Sulfonsäure- bzw. Sulfonatgruppen, wie z.B. in der WO-A 00/39181 (S. 8 Z. 13 - S. 9 Z. 19) beschrieben, insbesondere 2-Acrylamido-2-methylpropansulfonsäure.

Optional können auch weitere zur radikalischen Copolymerisation befähigte Monomere als Verbindungen der Komponente d) eingesetzt werden. Dies können beispielsweise di- oder höherfunktionelle (Meth)acrylatmonomere und/oder Vinylmonomere, wie z.B. Hexandioldi(meth)-acrylat oder Divinylbenzol sein. Des weiteren möglich ist die Zugabe polymerisierbarer, nichtionisch hydrophilierend wirkender Verbindungen wie Acrylate hydroxyfunktioneller Polyalkylenoxidether.

Die Mengenverhältnisse der Aufbaukomponenten a) bis d) werden typischerweise so gewählt, dass eine OH-Zahl von 12 bis 200 mg KOH/g, bevorzugt von 25 bis 150 mg KOH/g und besonders bevorzugt von 50 bis 150 mg KOH/g Feststoff und einer Säurezahl von 0 bis 50 mg KOH/g, bevorzugt 10 bis 30, besonders bevorzugt von 15 bis 25 mg KOH/g Feststoff resultiert.

Bevorzugt werden bezogen auf das Copolymerisat 50 - 85 Gew.-% Komponente a), 15 - 40 Gew.-% Komponente b), 0,5 - 5 Gew.-% Komponente c) und 0 - 34,5 Gew.-% Komponente d) gewählt, so dass Copolymerisate erhalten werden, die hinsichtlich OH- und Säurezahl den vorstehenden Angaben entsprechen.

Bevorzugt werden in e) Verbindungen der Formel (I) eingesetzt, wobei
- R¹: 2 bis 6 Kohlenstoffatome und
- R³, R⁴: 1 bis 7 Kohlenstoffatome enthält
- R²: H oder CH₃ ist und
- n: 1 bis 4 ist.

Besonders bevorzugt werden in e) Verbindungen der Formel (I) eingesetzt, wobei
- R¹: 2 oder 4 Kohlenstoffatome und
- R³, R⁴: 1 bis 7 Kohlenstoffatome enthält,
- R²: CH₃ ist und
- n: 2 ist.

Als Komponente e) kommen beispielsweise die Umsetzungsprodukte von Gycidylestern aliphatischer Carbonsäuren (e1)) mit aliphatischen, araliphatischen oder aromatischen Carbonsäuren (e2)) in Betracht.

Bevorzugte Verbindungen der Komponente e1) für diesen Fall sind Gycidylester der Versaticsäure, die beispielsweise als Cardura^{®} E10P von der Resolution BV., Niederlande erhältlich sind.

Bevorzugte Verbindungen der Komponente e2) für diesen Fall sind gesättigte aliphatische Monocarbonsäuren wie Essig-, Propion-, Butter-, Pentan-, Hexan-, Heptan-, Octan-, 2-Ethylhexan-, Nonan-, Decan-, Laurin-, Myristin-, Palmitin-, Margarin-, Stearin-, Arachin-, Behen-, Lignocerinsäure oder ungesättigte Monocarbonsäuren wie Öl-, Linol-, Linolen-, Ricinolsäure oder aromatischen Monocarbonsäuren wie Benzoesäure, aliphatische Di- oder Polycarbonsäuren wie Bernstein-, Glutar-, Adipin-, Pimelin-, Kork-, Azelain-, Sebacin-, Nonandicarbon-, Decandicarbon-, Dimerfettsäuren, welche durch Dimerisierung ungesättigter Monocarbonsäuren erhältlich sind, aromatische Di oder Polycarbonsäuren wie beispielsweise Terephthal-, Isophthal-, o-Phthal-, Tetrahydrophthal-, Hexahydrophthal- oder Trimellitsäure. Selbstverständlich können auch Gemische der genannten Verbindungen in Komponente e2) eingesetzt werden.

Besonders bevorzugt ist die Verwendung von Glycidylestern der Versaticsäure als e1) in Kombination mit aliphatischen Monocarbonsäuren wie 2-Ethylhexan-, Decan-, Laurin-, Myristin-, Palmitin-, Stearin-, Arachin- und Behensäure und ungesättigten Monocarbonsäuren wie Öl-, Linol-, Linolen-, Ricinolsäure sowie Dicarbonsäuren wie Bernstein- und Adipinsäure oder die isomeren Phthalsäuren als e2). Besonders bevorzugt wird in e2) Adipinsäure eingesetzt.

Die Herstellung der Verbindungen der Komponente e) aus den Komponenten e1) und e2) kann vor oder simultan zur radikalischen Polymerisation der ungesättigten Monomere a) bis d) erfolgen.

Die Temperaturen liegen dabei typischerweise bei 50 bis 200°C, bevorzugt 90 bis 140°C. Bevorzugt erfolgt die Herstellung der Verbindungen der Komponente e) aus e1) und e2) vor der radikalischen Polymerisation der ungesättigten Komponenten a) bis d).

Die Menge der Komponente e) in Bezug auf die Summe der Mengen von a) bis e) beträgt typischerweise 5 bis 60 Gew.-%, bevorzugt 10 bis 30 Gew.-% und besonders bevorzugt 15 bis 30 Gew.-%..

Die Vorgehensweise zur Polymerisation der ungesättigten Monomere ist dem Fachmann an sich vertraut. Typischerweise werden dazu in einem Reaktionsgefäß der Reaktivverdünner e) bzw. die Aufbaukomponenten des Reaktivverdünners e1) und e2) vorgelegt und die ungesättigten Monomere unter Einsatz eines Radikalinitiators polymerisiert.

Gegebenenfalls können zusätzliche organische Lösemittel in untergeordneter Menge zum Einsatz kommen. Geeignete Hilfslösemittel sind beliebige in der Lacktechnologie bekannte Lösemittel, wie z.B. Alkohole, Ether, Ethergruppen-haltige Alkohole, Ester, Ketone, N-Methylpyrrolidon oder unpolare Kohlenwasserstoffe bzw. Gemische dieser Lösemittel. Die Lösemittel werden in solchen Mengen eingesetzt, dass ihr Gehalt in der fertigen Dispersion 0 bis 5 Gew.-% beträgt. Falls erforderlich können die eingesetzten Lösemittel durch eine Destillation wieder teilweise entfernt werden. In einer bevorzugten Ausführungsform wird jedoch ganz auf den Einsatz zusätzlicher organischer Lösemittel verzichtet.

Die Copolymerisation wird im Allgemeinen bei 40 bis 200°C, bevorzugt bei 60 bis 180°C, besonders bevorzugt bei 80 bis 160°C durchgeführt.

Als Initiatoren für die Polymerisationsreaktion eignen sich organische Peroxide wie Di-tert.-Butylperoxid oder tert.-Butylperoxy-2-ethylhexanoat und Azoverbindungen wie Azodiisobuttersäurenitril (AIBN). Die eingesetzten Initiatormengen hängen vom gewünschten Molekulargewicht ab. Aus Gründen der Prozesssicherheit und des leichteren Handlings können Peroxidinitiatoren auch als Lösung in geeigneten organischen Lösemitteln der oben genannten Art eingesetzt werden.

In einer bevorzugten Ausführungsform des Verfahren erfolgt eine zweistufige Zugabe und Polymerisation von ungesättigten Monomeren der vorstehend genanten Art in Anwesenheit der Komponente e). Dabei wird in einem ersten Schritt (I) ein hydroxyfunktionelles Copolymerisat mit einer OH-Zahl von 12 bis 200 mg KOH/g Feststoff und einer Säurezahl von 0 bis 50 mg KOH/g Feststoff bestehend aus 55 - 90 Gew.-% Komponente a), 2,5 - 50 Gew.-% Komponente b), 0 - 6,5 Gew.-% Komponente c) und 0 - 42,5 Gew.-% Komponente d) hergestellt. In einem anschließenden Schritt (II) wird in der aus Schritt (I) erhaltenen Reaktionsmischung ein weiteres Polymerisat aus Monomeren der Komponenten a) - d) hergestellt, wobei dieses Polymerisat eine OH-Zahl von 20 bis 200 mg KOH/g Feststoff und eine Säurezahl von 50 bis 200 mg KOH/g Feststoff aufweist. Das Polymerisat aus Schritt (II) besteht dabei aus 45 - 80 Gew.-% Komponente a), 5-50 Gew.-% Komponente b), 6,5 - 25 Gew.-% Komponente c) und 0 - 43,5 Gew.-% Komponente d). Die %-Angaben der Polymerisatzusammensetzung addieren sich je Polymerisat zu 100 Gew.-% auf. Die Monomermengen der beiden Polymerisatherstellungen sind dabei so zu wählen, dass das Massenverhältnis des Polymerisats aus Schritt (I) zu dem aus Schritt (II) 10:1 bis 1:2, bevorzugt 6:1 bis 2:1 beträgt.

Statt eines mehrstufigen Polymerisationsverfahren ist es ebenfalls möglich den Prozess kontinuierlich (Gradientenpolymerisation) durchzuführen, d.h. es wird eine Monomermischung mit sich gemäß der Zusammensetzung des oder der Copolymerisate A) ändernder Zusammensetzung zugegeben, wobei bevorzugt die hydrophilen Monomeranteile gemäß der Komponenten c) und gegebenenfalls d) gegen Ende des Zulaufs höher sind als zu Beginn.

Die nach dem erfindungsgemäßen Verfahren erhältlichen Copolymerisate weisen zahlenmittlere Molekulargewichte Mₙ von 500 bis 30 000 g/mol, bevorzugt 1 000 bis 15 000 g/mol, besonders bevorzugt 1 500 bis 10 000 g/mol auf.

Vor, während oder nach der Dispergierung der hydroxyfunktionellen Copolymerisate A) in Wasser (Schritt C)) werden die vorhandenen Säuregruppen zumindest anteilig durch Zugabe geeigneter Neutralisationsmittel in ihre Salzform überführt (Schritt B)). Als Neutralisationstnittel geeignet sind organische Amine oder wasserlösliche anorganische Basen, wie z.B. lösliche Metallhydroxide, -Carbonate oder -Hydrogencarbonate.

Beispiele für geeignete Amine sind N-Methylmorpholin, Triethylamin, Ethyldiisopropylamin, N,N-Dimethylethanolamin, N,N-Dimethylisopropanolamin, N-Methyldicthanolamin, Diethylethanolamin, Triethanolamin, Butanolamin, Morpholin, 2-Atninomethyl-2-methyl-propanol oder Isophorondiamin. In Mischungen kann auch anteilig Ammoniak eingesetzt werden. Besonders bevorzugt sind Triethanolamin, N,N-Dimethylethanolamin und Ethyldiisopropylamin.

Die Neutralisationsmittel werden in B) in solchen Mengen zugesetzt, dass in Summe ein theoretischer Neutralisationsgrad [der Säuregruppen] von 40 bis 150 %, bevorzugt 60 bis 120 % vorliegt. Der theoretische Neutralisationsgrad versteht sich dabei als Verhältnis von zugesetzten basischen Gruppen der Neutralisationskomponente aus B) zu Säurefunktioncn des Copolymerisats gemäß der Bruttozusammensctzung. Der pH-Wert der erfindungsgemäßen wässrigen Bindemitteldispersion beträgt 6 bis 10, bevorzugt 6,5 bis 9.

Die erfindungsgemäßen wässrigen, hydroxyfunktionellen Bindemittcldispersionen weisen einen Festkörpergehalt von 25 bis 70 Gew.-%, bevorzugt 35 bis 60 Gew.-%, besonders bevorzugt von 50 bis 59 Gew.-% auf, sowie einen Gehalt an organischen Lösemitteln von 0 bis 12 Gew.-%, bevorzugt 1 bis 3,5 Gew.-% auf.

Die erfindungsgemäßen Bindemittel-Dispersionen können zu wässrigen Beschichtungsmitteln verarbeitet werden. Durch Kombination mit Vemetzem können dabei, je nach Reaktivität oder gegebenenfalls Blockierung der Vernetzer, sowohl Einkomponentenlacke als auch Zweikomponentcnlacke hergestellt werden. Unter Einkomponentenlacken im Sinne der vorliegenden Erfindung sind dabei Überzugsmittel zu verstehen, bei denen Bindemittelkomponente und Vernetzerkomponente zusammen gelagert werden können, ohne dass eine Vernetzungsreaktion in merklichen bzw. für die spätere Applikation schädlichem Ausmaß stattfindet. Die Vernetzungsreaktion findet erst bei Applikation nach einer Aktivierung des Vernetzers statt. Diese Aktivierung kann z.B. durch Tempcratursteigerung bewirkt werden. Unter Zweikomponentenlacken im Sinne der vorliegenden Erfindung versteht man Überzugsmittel, bei denen Bindemittelkomponente und Vernetzerkomponente aufgrund ihrer hohen Reaktivität in getrennten Gefäßen gelagert werden müssen. Die beiden Komponenten werden erst kurz vor Applikation gemischt und reagieren dann im Allgemeinen ohne zusätzliche Aktivierung. Zur Beschleunigung der Vernetzungsreaktion können aber auch Katalysatoren eingesetzt oder höhere Temperaturen angewendet werden.

Gegenstand der vorliegenden Erfindung sind daher auch wässrige Beschichtungsmittel mindestens enthaltend
i) ein oder mehrere erfindungsgemäße Copolymerisatdispersionen sowie
ii) mindestens einen OH-gruppenreaktiven Vernetzer.

Geeignete OH-gruppenreaktive Vernetzer sind beispielsweise Polyisocyanat-Vernetzer, Amid- und Amin-Formaldehydharze, Phenolharze, Aldehyd- und Ketonharze, wie z.B. Phenol-Formaldehydharze, Resole, Furanharze, Harnstoffharze, Carbamidsäureesterharze, Triazinharze, Melaminharze, Benzoguanaminharze, Cyanamidharze, Anilinharze, wie sie in "Lackkunstharze", H. Wagner, H.F. Sarx, Carl Hanser Verlag München, 1971, beschrieben sind.

Bevorzugt werden als Vernetzer gegebenenfalls blockierte Polyisocyanate eingesetzt. Solche Polyisocyanate weisen typischerweise 2 oder mehr NCO-Gruppen pro Molekül auf und basieren beispielsweise auf Isophorondiisocyanat, Hexamethylendiisocyanat, 1,4-Diisocyanatocyclohexan, Bis-(4-iso-cyanatocyclohexan)-methan, 1,3-Diisocyanatobenzol, Triisocyanatononan oder den isomeren 2,4- und 2,6-TDI und können ferner Urethan-, Isocyanurat und/oder Biuretgruppen aufweisen.

Besonders bevorzugt ist der Einsatz niedrigviskoser gegebenenfalls hydrophilierter Polyisocyanate der vorstehend genannten Art auf Basis aliphatischer oder cycloaliphatischer Isocyanate.

Die als Vernetzer eingesetzten Polyisocyanate weisen bei 23°C im Allgemeinen eine Viskosität von 10 bis 5 000 mPas auf und können auch falls zur Viskositätseinstellung gewünscht in Abmischung mit geringen Mengen an inerten Lösemitteln zum Einsatz gelangen.

Die erfindungswesentlichen Copolymerisate sind im Allgemeinen ausreichend hydrophil, so dass auch hydrophobe Vernetzerharze ohne zusätzliche Emulgatoren dispergiert werden können. Eine Verwendung externer Emulgatoren ist dadurch jedoch nicht ausgeschlossen.

Wasserlösliche oder dispergierbare Polyisocyanate sind z.B. durch Modifikation mit Carboxylat-, Sulfonat- und/oder Polyethylenoxidgruppen und/oder Polyethylenoxid/Polypropylenoxidgruppen erhältlich. Eine Hydrophilierung der Polyisocyanate ist z.B. durch Umsetzung mit unterschüssigen Mengen an einwertigen, hydrophilen Polyetheralkoholen möglich. Die Herstellung derartiger hydrophilierter Polyisocyanate ist beispielsweise in der EP-A 0 540 985 (S. 3, Z 55 bis S. 4 Z. 5) beschrieben.

Gut geeignet sind auch die in der EP-A 959 087 (S. 3 Z. 39 bis 51) beschriebenen Allophanatgruppen enthaltenden Polyisocyanate, die durch Umsetzung monomerenarmer Polyisocyanate mit Polyethylenoxidpolyetheralkoholen unter Allophanatisierungsbedingungen hergestellt werden. Auch die in der DE-A 100 078 21 (S. 2 Z. 66 bis S. 3 Z. 5) beschriebenen wasserdispergierbaren Polyisocyanatgemische auf Basis von Triisocyanatononan sind geeignet, sowie mit ionischen Gruppen (Sulfonat-, Phosphonatgruppen) hydrophilierte Polyisocyanate, wie sie z.B. in der DE 100 24 624 (S. 3 Z. 13 bis 33) beschrieben sind.

Prinzipiell ist natürlich auch der Einsatz von Mischungen verschiedener Vernetzerharze möglich.

Vor, während oder nach der Herstellung der erfindungsgemäßen wässrigen, hydroxyfunktionellen Bindemitteldispersion können die üblichen Hilfs- und Zusatzmittel der Lacktechnologie zugesetzt werden, wie z.B. Entschäumungsmittel, Verdickungsmittel, Pigmente, Dispergierhilfsmittel, Katalysatoren, Hautverhinderungsmittel, Antiabsetzmittel oder Emulgatoren.

Diese Hilfs- und Zusatzmittel können auch dem Beschichtungsmittel, enthaltend die erfindungsgemäßen wässrigen, hydroxyfunktionellen Bindemitteldispersionen, zugesetzt werden.

Die wässrigen Beschichtungsmittel, enthaltend die erfindungsgemäßen wässrigen, hydroxyfunktionellen Copolymerisatdispersionen eignen sich für alle Einsatzgebiete in denen wässrige Anstrich- und Beschichtungssysteme mit hohen Anforderungen an die Beständigkeit der Filme Verwendung finden, z.B. für die Beschichtung mineralischer Baustoff-Oberflächen, Lackierung und Versiegelung von Holz und Holzwerkstoffen, Beschichtung metallischer Oberflächen (Metallbeschichtung), Beschichtung und Lackierung asphalt- oder bitumenhaltiger Beläge, Lackierung und Versiegelung diverser Kunststoffoberflächen (Kunststoffbeschichtung) sowie Hochglanzlacke.

Da Beschichtungsmittel enthaltend die erfindungswesentlichen Copolymerisatdispersionen zu Beschichtungen mit sehr hohem Eigenschaftsniveau führen, eignen sie sich auch zu Herstellung von rissüberbrückenden Beschichtungen vorzugsweise im Baubereich und auf mineralischen Untergründen.

Die wässrigen Beschichtungsmittel, enthaltend die erfindungsgemäßen wässrigen, hydroxyfunktionellen Bindemitteldispersionen, werden zur Herstellung von Grundierungen, Füller, pigmentierter oder transparenter Decklacke, Klarlacke und Hochglanzlacke sowie Einschichtlacke, die in der Einzel- und Serienapplikation, z.B. im Bereich der Industrielackierung, Automobil-Erst- und
- Reparaturlackierung Anwendung finden können, eingesetzt.

Es ist bevorzugt die wässrigen Beschichtungsmittel, enthaltend die erfindungsgemäßen wässrigen, hydroxyfunktionellen Bindemitteldispersionen für die Beschichtung bzw. Lackierung mineralischer Oberflächen, von Holz und Kunststoffen.

Die Aushärtung der erfindungsgemäßen Beschichtungsmittel erfolgt dabei typischerweise bei Temperaturen von 0 bis 140°C, bevorzugt von 18 bis 80°C.

Diese Beschichtungen weisen bei sehr guter Filmoptik ein hohes Niveau in Lösemittel- und Chemikalienbeständigkeit, gute Wetterbeständigkeit, hohe Härte und schnelle Trocknung auf.

Die Herstellung der Beschichtungen kann nach den unterschiedlichen Spritzverfahren wie beispielsweise Luftdruck-, Airless- oder Elektrostatik-Spritzverfahren unter Verwendung von Ein- oder gegebenenfalls Zweikomponenten-Spritzanlagen erfolgen. Die Lacke und Beschichtungsmittel, enthaltend die erfindungsgemäßen wässrigen, hydroxyfunktionellen Bindemitteldispersionen, können jedoch auch nach anderen Methoden, beispielsweise durch Streichen, Rollen oder Rakeln appliziert werden.

### Beispiele:

Soweit nicht abweichend angegeben beziehen sich alle Prozentangaben auf Gewichtsprozent.

Viskositätsmessungen wurden mit einem Kegel-Platte-Viskosimeter Pysica Viscolab^{®} LC3 ISO der Firma Physica, Stuttgart, Deutschland nach DIN 53019 bei einem Schergefälle von 40 s⁻¹ durchgeführt.

Die Bestimmung der mittleren Teilchengröße erfolgte mittels Laser-Korrelations-Spektroskopie (Zetasizer^{®} 1000, Malvem Instruments, Herrenberg, Deutschland).

Die angegebenen OH-Zahlen wurden ausgehend von den eingesetzten Monomeren berechnet.

### Säurezahlen: Bestimmungsmethode, DIN ISO 3682

Cardura^{®} E10P: Glycidylester der Versaticsäure, Resolution BV., NL

Dowanol^{®} PnB: Propylenglycol-n-butylether, Dow Chemicals, Midland, USA.

Peroxan^{®} DB: Di-tert.-butylperoxid, Pergan GmbH, Bocholt, Deutschland.

### Beispiel 1 Reaktiwerdünner

In einem 5 1-Reaktionsgefäß mit Rühr-, Kühl- und Heizvorrichtung wurden bei 20°C 3172 g Cardura^{®} E10P und 927 g Adipinsäure eingewogen. Unter Rühren wurde auf 140°C aufgeheizt. Ab ca. 140°C lief eine exotherme Reaktion ab. Es wurde weitere 4 Stunden bei 140°C nachgerührt. Es wurde ein hell gelbes Harz mit einer Viskosität von 2 900 mPas bei 23°C erhalten.

### Beispiel 2 Reaktivverdünner

In einem 5 1-Reaktionsgefäß mit Rühr-, Kühl- und Heizvorrichtung wurden bei 20°C 3172 g Cardura^{®} E10P und 1054 g Isophthalsäure eingewogen. Unter Rühren wurde auf 160°C aufgeheizt. Ab ca. 150°C lief eine exotherme Reaktion ab. Es wurde weitere 6 Stunden bei 160°C nachgerührt. Man erhielt ein hell gelbes Harz mit einer Viskosität von 150 000 mPas bei 23°C.

### Beispiel 3

In einem 6 1-Reaktionsgefäß mit Rühr-, Kühl- und Heizvorrichtung wurden 600 g Reaktivverdünner gemäß Beispiel 1 vorgelegt und auf 148°C aufgeheizt. Bei dieser Temperatur wurde eine Lösung aus 8,25 g Di-tert.-butylperoxid in 8,25 g Dowanol^{®} PnB innerhalb 20 min zugetropft. Im Anschluss daran wurde eine Monomermischung aus 365 g Methylmethacrylat, 854 g Hydroxyethylmethacrylat, 600 g Butylacrylat und 480 g Styrol sowie parallel dazu eine Lösung von 28,5 g Di-tert.-butylperoxid in 28,5 g Dowanol^{®} PnB innerhalb von 4,5 Stunden gleichmäßig zudosiert. Man hielt ca. 20 Minuten bei dieser Temperatur. Im Anschluss daran wurde eine Monomermischung aus 122,25 g Methylmethacrylat, 172,75 g Hydroxyethylmethacrylat, 96 g Butylacrylat und 84 g Acrylsäure sowie parallel dazu eine Lösung von 8,25 g Di-tert.-butylperoxid in 20,75 g Dowanol^{®} PnB innerhalb von 1,5 Stunden gleichmäßig zudosiert. Anschließend 1 Stunde bei 148°C nachgerührt, dann auf 100°C abgekühlt und 174 g Triethanolamin zugegeben. Nach 30 Minuten Homogenisieren wurde innerhalb von 2 Stunden bei 80°C mit 2050 g Wasser dispergiert. Man erhielt eine Copolymerisat-Dispersion mit folgenden Daten:
OH-Gehalt (Festkörper, theoretisch berechnet) 5,9 %
Säurezahl (Festkörper) 23 mg KOH/g
Festkörpergehalt 50 %
Viskosität 2 600 mPas/23°C
pH-Wert (10 %ig in Wasser) 7,5
Neutralisationsgrad 100 %
Mittlere Teilchengröße 115 nm

### Beispiel 4

In einem 6 1-Reaktionsgefäß mit Rühr-, Kühl- und Heizvorrichtung wurden 600 g Reaktivverdünner gemäß Beispiel 2 vorgelegt und auf 148°C aufgeheizt. Bei dieser Temperatur wurde eine Lösung aus 8,25 g Di-tert.-butylperoxid in 8,25 g Dowanol^{®} PnB innerhalb 20 min zugetropft. Im Anschluss daran wurde eine Monomermischung aus 365 g Methylmethacrylat, 854 g Hydroxyethylmethacrylat, 600 g Butylacrylat und 480 g Styrol sowie parallel dazu eine Lösung von 28,5 g Di-tert.-butylperoxid in 28,5 g Dowanol^{®} PnB innerhalb von 4,5 Stunden gleichmäßig zudosiert. Man hielt ca. 20 Minuten bei dieser Temperatur. Im Anschluss daran wurde eine Monomermischung aus 122,25 g Methylmethacrylat, 172,75 g Hydroxyethylmethacrylat, 96 g Butylacrylat und 84 g Acrylsäure sowie parallel dazu eine Lösung von 8,25 g Di-tert.-butylperoxid in 20,75 g Dowanol^{®} PnB innerhalb von 1,5 Stunden gleichmäßig zudosiert. Anschließend 1 Stunde bei 148°C nachgerührt, dann auf 100°C abgekühlt und 174 g Triethanolamin zugegeben. Nach 30 Minuten Homogenisieren wurde innerhalb von 2 Stunden bei 80°C mit 2050 g Wasser dispergiert. Man erhielt eine Copolymerisat-Dispersion mit folgenden Daten:
OH-Gehalt (Festkörper; theoretisch berechnet) 3,3 %
Säurezahl (Festkörper) 23 mg KOH/g
Festkörpergehalt 50 %
Viskosität 1 700 mPas/23°C
pH-Wert (10 %ig in Wasser) 7,5
Neutralisationsgrad 100 %
Mittlere Teilchengröße 115 nm

### Beispiel 5: Vergleich

(EP-A 0758,007, Beispiel 1)

In einem 6 1-Reaktionsgefäß mit Rühr-, Kühl- und Heizvorrichtung wurden 116 g Butylglykol und 150 g Desmophen^{®} V218 (Polyether auf Basis von Propylenoxid und Glycerin, OH-Zahl 245 mg KOH/g, Bayer AG Leverkusen, DE) vorgelegt und auf 155°C aufgeheizt. Bei dieser Temperatur wurden 321 g Butylacrylat, 366 g Styrol und 198 g Hydroxyethylmethacrylat innerhalb 2 Stunden zudosiert und parallel dazu eine Lösung aus 17,1 g Di-tert.-butylperoxid in 28,6 g Butylglykol. Im Anschluss daran wurde eine Monomermischung aus 83 g Hydroxyethylmethacrylat, 180 g Butylacrylat, 139 g Styrol und 34 g Acrylsäure innerhalb 1 Stunde zudosiert und parallel dazu 12,9 g Di-tert.-butylperoxid in 21,4 g Butylglykol. Anschließend 2 Stunde bei 150 bis 155°C nachgerührt, dann auf 100°C abgekühlt und 50 g Dimethylethanolamin zugegeben. Nach 30 Minuten Homogenisieren wurde innerhalb von 2 Stunden bei 80°C mit 1980 g Wasser dispergiert. Man erhielt eine Copolymerisat-Dispersion mit folgenden Daten:
OH-Gehalt (Festkörper; theoretisch berechnet) 3,2 %
Säurezahl (Festkörper) 18 mg KOH/g
Festkörpergehalt 40 %
Viskosität 830 mPas/23°C
pH-Wert (10 %ig in Wasser) 9,4
Neutralisationsgrad 100 %
Mittlere Teilchengröße 51 nm
Lösemittelgehalt 4,5 %

### Beispiel 6: Beständigkeiten

Zur Beurteilung der Beständigkeiten wurden Beschichtungsmittel gemäß nachstehender Tabelle (Mengen in Gewichtsteilen) aus den Dispersionen der Beispiele 3 und 5 und Bayhydur^{®} XP 2451 Bayhydur^{®} XP 2451 (hydrophiliertes Polyisocyanat auf HDI-Basis, Bayer AG, Leverkusen, DE) als Vernetzer hergestellt, mit einem Handrakel auf eine Holzplatte (Buche) appliziert und 24 h bei Raumtemperatur ausgehärtet.

| Komponente | Film A | Film B |
|---|---|---|
| Dispersion aus Beispiel 3 | 100 | |
| Dispersion aus Beispiel 5 | | 100 |
| Bayhydur^{®} XP 2451 | 20,6 | 20,8 |

Chemikalienbeständigkeit in Anlehnung an DIN 68861,210 µm Nassfilm

| Medium und Dauer | | Film A | Film B |
|---|---|---|---|
| Wasser | 1 Tag | 5/2 | 5/2 |
| | 7 Tage | 5/2 | 4/2 |
| Schuhcreme | 5 Stunden | 5/2 | 4/2 |
| Rotwein | 5 Stunden | 4/2 | 4/2 |
| Ethanol 98% | 1 Stunde | 4/0 | 3/0 |
| Ammoniak, 12,5% | 1 Stunde | 5/2 | 4/2 |
| Isopropanol | 1 Stunde | 4/2 | 3/0 |
| | 5 Stunden | 4/1 | gelöst |

### Erster Wert: Flockenbildung

5 = keine sichtbare Veränderung; 0 = Prüffläche stark verändert bzw. zerstört

### Zweiter Wert: Resthärte

2 = unverändert; 0 = mechanisch leicht entfernbar

Der erfindungsgemäße Binder zeigt eine deutliche verbesserte Beständigkeit gegen aggressive Medien, insbesondere gegen Ethanol und Isopropanol.

### Beispiel 7: Glanz

Zur Beurteilung der Glanzeigenschaften wurden Beschichtungsmittel gemäß nachstehender Tabelle (Mengen in Gewichtsteilen) aus den Dispersionen der Beispiel 3 und 5 und Bayhydur^{®} XP 2451 (hydrophiliertes Polyisocyanat auf HDI-Basis, Bayer AG, Leverkusen, DE) als Vernetzer hergestellt, mit einem Handrakel auf eine Leneta-Folie (Kunststoff-Folie nach DIN 53775, schwarz-matt, 430 x 165 mm, B. Schwegmann GmbH, Gelsdorf, DE) appliziert und 24 Stunden bei Raumtemperatur ausgehärtet.

| Komponente | Film C | Film D |
|---|---|---|
| Dispersion aus Beispiel 3 | 100 | |
| Dispersion aus Beispiel 4 | | 100 |
| Bayhydur^{®} XP 2451 | 20,6 | 20,8 |

Glanz in Prozent gemessen nach DIN 67 530 bzw. ISO 2813 an Klarlack; 200 µm Nassfilm

| Winkel | Film C | Film D |
|---|---|---|
| 20° | 77% | 21% |
| 60° | 90 % | 55% |
| 85° | 98% | 78% |

Der erfindungsgemäße Binder führte zu Lackfilmen mit wesentlich höherem Glanz als der vergleichbare Binder nach dem Stand der Technik.

### Beispiel 8: Filmhärte

Zur Beurteilung der Filmhärte wurden Beschichtungsmittel gemäß nachstehender Tabelle (Mengen in Gewichtsteilen) aus den Dispersionen der Beispiel 3 und 5 und Bayhydur^{®} XP 2451 (2451 (hydrophiliertes Polyisocyanat auf HDI-Basis, Bayer AG, Leverkusen, DE) als Vernetzer hergestellt, mit einem Handrakel auf eine Glasplatte mit einer Nassfilmdicke von 150 µm gerakelt und 24 Stunden bei Raumtemperatur ausgehärtet.

Die Filmhärte wurde als Pendelhärte gemäß DIN EN ISO 1522 (Pendeldämpfung) bestimmt.

| | | |
|---|---|---|
| Komponente | Fihn A | Film B |
| Dispersion aus Beispiel 3 | 100 | |
| Dispersion aus Beispiel 5 | | 100 |
| Bayhydur^{®} XP 2451 | 20,6 | 20,8 |
| Pendelhärte nach 3 Tagen [s] | 94 | 78 |
| Pendelhärte nach 7 Tagen [s] | 113 | 91 |

Der Vergleich zeigt, dass die erfindungsgemäßen Bindemittel den Bindemitteln gemäß dem Stand der Technik sowohl in der Geschwindigkeit der Härteentwicklung wie in der Endhärte überlegen sind.

## Patentansprüche

1. Verfahren zur Herstellung von Copolymerisatdispersionen, bei dem
A) eine oder mehrere Vinylmonomermischungen enthaltend
a) OH-gruppenfreie (Meth)acrylsäureester und/oder Vinylaromaten,
b) hydroxyfunktionelle Vinylmonomere oder hydroxyfunktionelle (Meth)-acrylsäureester,
c) ionische und/oder potentiell ionische, zur radikalischen Copolymerisation befähigte Monomere sowie
d) gegebenenfalls weitere, von den Verbindungen der Komponenten a) - c) verschiedene zur radikalischen Copolymerisation befähigte Monomere
in Anwesenheit von
e) Verbindungen der Formel (I) 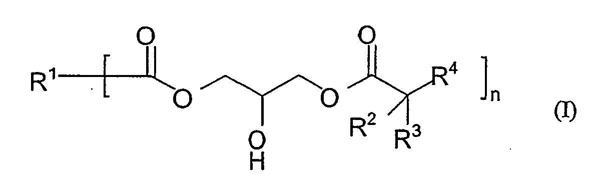 in der
R¹ ein aliphatischer, araliphatischer oder aromatischer Rest mit 1 bis 18 Kohlenstoffatomen ist,
R² H oder CH₃ ist,
R³, R⁴ gleiche oder unterschiedliche aliphatische Reste mit 1 bis 7 Kohlenstoffatomen sind und
n 1 bis 4 ist,
radikalisch polymerisiert werden und das so erhaltene Copolymerisat anschließend
B) vor oder nach Zugabe eines Neutralisationsmittels
C) in Wasser dispergiert wird, wobei des Neutralisationsmittel in B) in solchen Mengen zugesetzt wird, dass in Summe ein theoretischer Neutralisationsgrad von 40 bis 150% vorliegt.

2. Verfahren zur Herstellung von Copolymerisatdispersionen nach Anspruch 1, **dadurch gekennzeichnet, dass** die in A) hergestellten Polymerisate eine OH-Zahl von 50 bis 150 mg KOH/g Feststoff, eine Säurezahl von 15 bis 25 mg KOH/g Feststoff und ein zahlenmittleres Molekulargewicht Mₙ von 1500 bis 10 000 g/mol aufweisen.

3. Verfahren zur Herstellung von Copolymerisatdispersionen nach Anspruch 1 oder 2, **dadurch gekennzeichnet, dass** die in A) hergestellten Polymerisate aus 50 - 85 Gew.-% Komponente a), 15 - 40 Gew.-% Komponente b), 0,5 - 5 Gew.-% Komponente c) und 0 - 34,5 Gew.-% Komponente d) bestehen und wobei sich die Mengen aus den vorstehenden Bereichen zu 100 Gew.-% aufaddieren.

4. Verfahren zur Herstellung von Copolymerisatdispersionen nach einem der Ansprüche 1 bis 3, **dadurch gekennzeichnet, dass** in Komponente e) Umsetzungsprodukte von Gycidylestern aliphatischer Carbonsäuren mit aliphatischen, araliphatischen oder aromatischen Carbonsäuren eingesetzt werden.

5. Verfahren zur Herstellung von Copolymerisatdispersionen nach einem der Ansprüche 1 bis 4, **dadurch gekennzeichnet, dass** die Polymerisation zweistufig durchgeführt wird.

6. Copolymerisatdispersionen erhältlich nach einem Verfahren nach einem der Ansprüche 1 bis 5.

7. Verwendung der Copolymerisatdispersionen nach Anspruch 6 bei der Herstellung von Beschichtungen.

8. Wässrige Beschichtungsmittel mindestens enthaltend
i) ein oder mehrere Copolymerisatdispersionen gemäß Anspruch 6 sowie
ii) mindestens einen OH-gruppenreaktiven Vernetzer.

9. Beschichtungen erhältlich aus Copolymerisatdispersionen gemäß Anspruch 6.

10. Substrate beschichtet mit Beschichtungen nach Anspruch 9.

## Claims

1. A process for the production of copolymer dispersions, in which
A) one or more vinyl monomer mixtures containing
a) OH-group-free (meth)acrylates and/or vinyl aromatics,
b) hydroxyfunctional vinyl monomers or hydroxyfunctional (meth)acrylates,
c) ionic and/or potentially ionic monomers capable of free-radical copolymerisation and
d) optionally additional monomers other than the compounds of components a) - c) capable of free-radical copolymerisation
are free-radically polymerised in the presence of
e) compounds of formula (I) 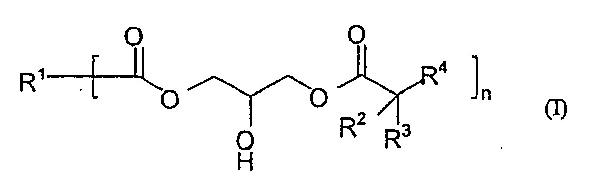 in which
R¹ is an aliphatic, araliphatic or aromatic residue with 1 to 18 carbon atoms,
R² is H or CH₃,
R³, R⁴ are the same or different aliphatic residues with 1 to 7 carbon atoms and
n is 1 to 4,
and the copolymer thus obtained is then,
B) before or after addition of a neutralising agent,
C) dispersed in water,
wherein the neutralising agent in B) is added in quantities such that, overall, a theoretical degree of neutralisation of 40 to 150% is present.

2. The process for the production of copolymer dispersions according to claim 1, **characterised in that** the polymers produced in A) have an OH number of 50 to 150 mg KOH/g solids, an acid value of 15 to 25 mg KOH/g solids and a number average molecular weight Mₙ of 1 500 to 10 000 g/mol.

3. The process for the production of copolymer dispersions according to claim 1 or 2, **characterised in that** the polymers produced in A) consist of 50 - 85 wt.% component a), 15 - 40 wt.% component b), 0.5
- 5 wt.% component c) and 0 - 34.5 wt.% component d) and wherein the quantities from the said ranges add up to 100 wt.%.

4. The process for the production of copolymer dispersions according to one of claims 1 to 3, **characterised in that**, in component e), reaction products of glycidyl esters of aliphatic carboxylic acids with aliphatic, araliphatic or aromatic carboxylic acids are used.

5. The process for the production of copolymer dispersions according to one of claims 1 to 4, **characterised in that** the polymerisation is carried out in two steps.

6. Copolymer dispersions obtainable by a process according to one of claims 1 to 5.

7. Use of the copolymer dispersions according to claim 6 in the production of coatings.

8. Aqueous coating compositions at least containing
i) one or more copolymer dispersions according to claim 6 and
ii) at least one OH-group-reactive crosslinking agent.

9. Coatings obtainable from copolymer dispersions according to claim 6.

10. Substrates coated with coatings according to claim 9.

## Revendications

1. Procédé de préparation de dispersions de copolymères, dans lequel
A) un ou plusieurs mélanges de monomères vinyliques contenant
a) des esters (méth)acryliques exempts de radicaux OH et/ou des vinylaromatiques,
b) des monomères vinyliques à fonction hydroxy ou des esters (méth) acryliques à fonction hydroxy,
c) des monomères copolymérisables de manière radicalaire, ioniques et/ou potentiellement ioniques,
d) le cas échéant, d'autres monomères copolymérisables de manière radicalaire, différents des composés des composants a) - c),
en présence de
e) des composés de formule (I) : 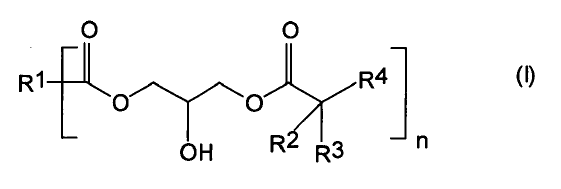
dans laquelle
R¹ est un reste aliphatique, araliphatique ou aromatique ayant 1 à 18 atomes de carbone,
R² est H ou CH₃,
R ³, R⁴ sont des restes aliphatiques identiques ou différents ayant 1 à 7 atomes de carbone, et
n est 1 à 4,
sont polymérisés de manière radicalaire et le copolymère ainsi obtenu est ensuite
B) avant ou après l'addition d'un agent de neutralisation
C) dispersé dans l'eau,
où l'agent de neutralisation de B) est ajouté en une quantité telle que au total, on ait un taux de neutralisation théorique allant de 40 à 150%.

2. Procédé de préparation de dispersions de copolymères selon la revendication 1, **caractérisé en ce que** le polymère préparé en A) présente un indice OH allant de 50 à 150 mg KOH/matière solide, un indice d'acide allant de 15 à 25 mg KOH/matière solide et un poids moléculaire moyen en nombre Mₙ allant de 1500 à 10 000 g/mole.

3. Procédé de préparation de dispersions de copolymères selon la revendication 1 ou 2, **caractérisé en ce que** le polymère préparé en A) consiste en 50-85% en poids du composant a), 15-40% en poids du composant b), 0,5-5% en poids du composant c) et 0-34,5% en poids du composant d), et où les quantités au sein des intervalles précédents s'additionnent pour faire 100%.

4. Procédé de préparation de dispersions de copolymères selon l'une des revendications 1 à 3, **caractérisé en ce que** dans le composant e), les produits de réaction d'esters de glycidyle d'acide carboxylique aliphatique avec des acides carboxyliques aliphatiques, araliphatiques ou aromatiques sont mis en oeuvre.

5. Procédé de préparation de dispersions de copolymères selon l'une des revendications 1 à 4, **caractérisé en ce que** la polymérisation est réalisée en deux étapes.

6. Dispersions de copolymères obtenues par un procédé selon l'une des revendications 1 à 5.

7. Utilisation des dispersions de copolymères selon la revendication 6, pour la préparation de revêtements.

8. Agent de revêtement aqueux, contenant au moins
i) une ou plusieurs dispersions de copolymères selon la revendication 6, ainsi que
ii) au moins un agent de réticulation réagissant avec les radicaux OH.

9. Revêtements pouvant être obtenus à partir des dispersions de copolymères selon la revendication 6.

10. Substrats revêtus avec les revêtements selon la revendication 9.
